(19) Europäisches Patentamt
European Patent Office
Office européen des brevets

(11) **EP 3 067 149 A1**

(12) **EUROPÄISCHE PATENTANMELDUNG**

(43) Veröffentlichungstag:
**14.09.2016  Patentblatt 2016/37**

(21) Anmeldenummer: **15000745.8**

(22) Anmeldetag: **13.03.2015**

(51) Int Cl.:
**B23K 20/12** (2006.01)     **H02G 5/06** (2006.01)
**B23K 20/233** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Wartmann Technologie AG**
**4538 Oberbipp (CH)**

(72) Erfinder: **Schafeer, Jean-Louis**
**CH-4632 Trimbach (CH)**

(74) Vertreter: **Cohausz Hannig Borkowski Wißgott**
**Patent- und Rechtsanwaltskanzlei**
**Friedlander Strasse 37**
**12489 Berlin (DE)**

(54) **INNENDRUCKBEAUFSCHLAGTES ROHR FÜR GASISOLIERTE SCHALTANLAGEN ODER ÜBERTRAGUNGSLEITUNGEN UND VERFAHREN ZU IHRER HERSTELLUNG**

(57)     Die Erfindung betrifft ein innendruckbeaufschlagtes Rohr aus Aluminium oder einer Aluminiumlegierung für gasisolierte Schaltanlagen (GIS) oder Übertragungsleitungen (GIL), das aus einem planen Blech mit definierter Wanddicke durch Rundbiegen oder Formwalzen zu einem Schlitzrohr (9) umgeformt ist, dessen auf Stoß (12) gegenüberliegende Kanten (10,11) gegeneinander gedrückt und mit einem Gegenhalter (12) abgestützt durch Rührreibschweißen miteinander zu einer Längsnaht (10) verbunden sind. Die Aufgabe der Erfindung besteht darin, die Anwendung des Rührreibschweißens auch auf Rohre für GIS-Schaltanlagen und GIL-Übertragungsleitungen zu erweitern und dabei die Wandstärke der Rohre deutlich zu reduzieren, wobei die Montage der Rohre vereinfacht, Material und Kosten eingespart werden. Gelöst wird diese Aufgabe dadurch, dass die Längsnaht (17) im Vergleich zum Grundwerkstoff eine Festigkeit aufweist, die mindestens das 0,85fache bis nahe 1,0 der Festigkeit des Grundwerkstoffes beträgt und die Wandstärke (W1) des rührreibgeschweißten Schlitzrohrs (9) gegenüber der Wanddicke (W) eines schmelzgeschweißten Rohres um mindestens 12% bei gleicher Belastung minimiert ist.

FIG. 5

**Beschreibung**

Die Erfindung betrifft ein innendruckbeaufschlagtes Rohr aus Aluminium oder einer Aluminiumlegierung für gasisolierte Schaltanlagen (GIS) oder Übertragungsleitungen (GIL), das aus einem planen Blech mit definierter Wanddicke durch Rundbiegen oder Formwalzen zu einem Schlitzrohr umgeformt ist, dessen auf Stoß gegenüberliegende Kanten gegeneinander gedrückt und mit einem Gegenhalter abgestützt durch Rührreibschweißen miteinander zu einer Längsnaht verbunden sind.

Die Erfindung betrifft des Weiteren ein Verfahren zum Herstellen eines innendruckbeaufschlagtes Rohrs aus Aluminium oder einer Aluminiumlegierung für gasisolierte Schaltanlagen (GIS) oder Übertragungsleitungen (GIL), bei dem aus einem planen Blech mit definierter Wanddicke ein Schlitzrohr durch Rundbiegen oder Formwalzen umgeformt wird, dessen am Schlitz auf Stoß gegenüberliegende Kanten) gegeneinander gedrückt und an einem Gegenhalter abgestützt durch Rührreibschweißen miteinander zu einer Längsnaht verbunden werden.

Stand der Technik

Gasisolierte Schaltanlagen (GIS) und Übertragungsleitungen (GIL), sind hinlänglich bekannt (www. com/de/fg/ETG/Archiv/Arbeitsgebiete/Uebertragung-Verteilung/Documents/MCMG/25Jahre Betriebserfahrung mit GIL. pdf).

Gasisolierte Schaltanlagen (GIS) werden zur Schaltung hoher Spannungen, beispielsweise im Bereich von 52 bis 1200 kV, Bemessungsströmen von bis zu 8000 A eingesetzt und verwenden vor allem gasdichte mit $SF_6$ gefüllte Rohre aus Aluminium oder Aluminiumlegierungen mit einer Länge von bis zu 18 m bei Ausleitungen zu Freiluftdurchführungen.

Gasisolierte Übertragungsleitungen (GIL) dienen der Übertragung von Hochspannungen im Spannungsbereich zwischen 123 kV und 1200 kV mit Übertragungsströmen bis zu 8000 A.

Die GIL-Leitung besteht aus einem zentralen Aluminiumleiter, der auf Isolatoren ruht, welche ihrerseits den Aluminiumleiter in einem Mantelrohr aus robustem Aluminiumrohr zentriert. Das gasdichte Mantelrohr kapselt den Aluminiumleiter mechanisch und elektrisch sicher in einer Isoliergasfüllung vornehmlich aus Stickstoff mit geringen Beimischungen aus $SF_6$ und ist auf seiner inneren Mantelfläche über die gesamte Länge mit einer Teilchenfalle versehen (www.energy/siemens.com/hp/pool/hp/power-transmission/gas-insulated-transmission-lines/GIL d.pdf), die dazu dient, Metallpartikel, die während der Montage in das Innere des Mantelrohres gelangen, einzufangen und aufzunehmen (DE 10 2005 032 710 A1, WO 2007/006685 A1, EP 0 519 228 B1), um eine Beeinträchtigung der Isolation zwischen Stromleiter und Mantelrohr zu vermeiden.

Die Teilchenfalle besteht aus einem entlang der inneren Mantelfläche des Mantelrohrs verlaufenden metallischen Elektrode in Form eines T-Profils mit zur Mantelfläche gebogenen Schenkeln, eines Rundprofils, Rohres oder Vierkantprofils (DE 22 11 987 A1), die bodenseitig am Kapselungsrohr starr befestigt sind.

Als Rohre in gasisolierten Schaltanlagen oder Übertragungsleitungen kommen stranggepresste, spiralgeschweißte oder WIG-längsnahtgeschweißte Rohre aus hochleitfähigen Aluminiumlegierungen, beispielsweise E-Al, AlMgSi0,5, AlMg2Mn0,8, AlMg3, AlMg4,5 in Form von Rohrabschnitten mit Außendurchmessern von 375 bis 522 mm, einer Länge von bis zu 18 m Länge und einer Wandstärke zwischen 8 bis 15 mm zum Einsatz, welche erforderlichenfalls vor Ort gasdicht miteinander verbunden werden.

Die Montage und Befestigung der Teilchenfalle in den Rohrabschnitten der Mantelrohre für gasisolierte Übertragungsleitungen vor Ort erfordert zusätzliche Hilfseinrichtungen, ist kompliziert und material- und zeitaufwändig.

Es sind aus dem Stand der Technik eine Vielzahl von Verfahren zur Fertigung von Aluminiumrohren bekannt, beispielsweise das Umformen eines Bleches zu einem Längsnahtrohr (DE 813 289 C, DE 1 084 851 C, DE 1 408 769 A1, DE 27 16 949 A1, EP 1 362 648 B1), das Strangpressen von Rohren (DE 199 27 106 B4, DE 602 24 290 T2, DE 11 2012 001 777 T5) oder das Spiralschweißen von Rohren (DE 1 964 813 A1, DE 20 28 560 C3, DE 31 16 060 C2, DE 10 2009 051 695 B3, DE 10 2012 006 472 B4). Die Grundwerkstoffe der Längsnaht- oder schmelznahtgeschweißten Rohre werden durch herkömmliche MIG-, WIG- oder Laserschweißverfahren gefügt, wodurch die Schweißnähte gegenüber dem Grundwerkstoff ein Gefüge mit deutlichen Unterschieden in den mechanisch-physikalischen Eigenschaften wie Zugfestigkeit, Dehngrenze und Härte aufweisen. Bei spiralgeschweißten Rohren liegt der Schweißfaktor $v_N$ gemäß DIN EN 13480-3 bei 0,85, sofern die Wendelnaht nicht vollständig geprüft wird oder erreicht nur 0,7 bei Sichtprüfung (siehe G. WOSSOG, Handbuch Rohrleitungsbau, Band II, Berechnung, S. 127-133, Vulkan Verlag GmbH, 2. Auflage 2002).

Dies verursacht zwangläufig eine Verringerung in der Schweißnahtwertigkeit, so dass die Mindestwanddicke des Grundwerkstoffs entsprechend erhöht werden muss, um den Abfall in den Festigkeitswerten der Naht zu berücksichtigen. Das bedeutet, dass Rohre mit deutlich höheren Wandstärken eingesetzt werden müssen. Außerdem erfordert eine 100%ige Prüfung der Schweißnaht einen entsprechend hohen Prüfaufwand.

Aus anderen Lösungen ist bekannt, die aus einem Blechband geformten Schlitzrohre an den Stoßkanten des Schlitzes durch Rührreibschweißen zu verbinden (DE 101 48 958 A1, JP 11-333572 A, JP 11-226757 A).

In der DE 101 48 958 A1 ist ein Verfahren zur Rohrfertigung beschrieben, bei dem ein anfangs planes Blech zu einem Rohr umgeformt, die gegenüberstehenden Kanten gegeneinandergedrückt und dann längs der gebildeten Kontaktlinie durch Rührreibschweißen längsnahtverschweißt werden:, indem durch mechanische Reibung Wärme erzeugt, in den Kantenbereich eingespeist und unter Aufrechterhaltung des Druckes der Kanten gegeneinander im plastischen Zustand unterhalb der Schmelzpunktes miteinander verbunden werden. Die JP H11-333572 A offenbart ein vor dem Fügen an seinen Stoßkanten umgeformtes Blech, beispielsweise zum Ausbilden eines Überlappbereiches oder einer Nut-Feder-Verbindung. Dieser Stand der Technik arbeitet ohne einen Gegenhalter bei der Aufbringung der doch erheblich hohen Druckkräfte auf den Stoß gelegten Kanten. Die umgeformten Stoßkanten sollen die hohen Druckkräfte aufnehmen und der Deformation des Rohrkörpers beim Fügen entgegenwirken. Unabhängig davon, ob diese Maßnahme ausreichend ist, um die Unrundheit am gefügten Rohr zu vermeiden, ist die nachträgliche Umformung an den Stoßkanten eines Präzisionsbleches kompliziert und aufwändig, um die Ebenheit des Bleches ohne säbelförmigen Verzug sicherzustellen.

Die JP 11-226757A setzt zum Rührreibschweißen in Längsrichtung im Inneren des geformten Schlitzrohres ein hydraulisch-elastisches Gegenlager ein, um die vom Rührreibschweißwerkzeug aufgebrachten hohen Druckkräfte aufzunehmen und die Unrundheit zu vermeiden. Die Rohre bestehen aus einer Aluminiumlegierung des Typs JIS A5083 (AlMg4,5Mn) oder JIS A5052 (AlMg2,5), haben eine Länge von 4000 bis 5000 mm, einen Durchmesser von 1000 mm und eine Wandstärke von 120 mm. Die Deformation des Rohres beim Rührreibschweißen wird hauptsächlich im Zusammenspiel von Gegenhalter und einer Kühlung mit Stickstoff erreicht. Angaben zur Schweißnahtwertigkeit gegenüber dem Grundwerkstoff sind nicht offenbart und die mit diesem Stand der Technik erreiche Rohrlänge von bis zu 5000 mm und einer Dicke von 120 mm ist für einen Abschnitt in der Röhrtrasse einer GIL-Übertragungsleitung wesentlich zu kurz und für eine GIS-Schaltanlagen viel zu materialintensiv, was die Kosten einer Rohrtrasse signifikant erhöht, so dass sich das Rührreibschweißen von Rohren für GIS-Schaltanlagen und GIL-Übertragungsleitungen bisher nicht durchgesetzt hat.

Aufgabenstellung

Bei diesem Stand der Technik liegt der Erfindung die Aufgabe zugrunde, die Anwendung des Rührreibschweißens auch auf Rohre für GIS-Schaltanlagen und GIL-Übertragungsleitungen zu erweitern und die Wandstärke der Rohre deutlich zu reduzieren, wobei die Montage der Rohre vereinfacht, Material und Kosten eingespart werden.

Diese Aufgabe wird durch ein Rohr der eingangs genannten Art mit den Merkmalen des Anspruches 1 und ein Verfahren mit den Merkmalen des Anspruches 14 gelöst.

Vorteilhafte Ausgestaltungen des Rohrs sind den Unteransprüchen entnehmbar.

Die erfindungsgemäße Lösung geht von der Erkenntnis aus, die durch das Rührreibschweißen erzeugten höheren Festigkeiten in der Schweißnaht zur Reduktion der minimalen Wandstärke für Rohre in GIS-Schaltanlagen und GIL-Übertragungsleitungen zu nutzen.

Dies wird dadurch erreicht, dass die Zugfestigkeit und Dehnung in der Längsnaht im Vergleich zum Grundwerkstoff so bemessen ist, dass sie mindestens das 0,85fache bis nahe 1,0 der Festigkeit des Grundwerkstoffes beträgt und die Wandstärke des rührreibgeschweißten Schlitzrohrs gegenüber der Wanddicke eines schmelzgeschweißten Rohres um mindestens 12% bei gleicher Belastung herabgesetzt ist.

Von besonderer Bedeutung für den Werkstoff des Schlitzrohrs ist, dass der Werkstoff entsprechend aufeinander abgestimmte mechanische, physikalische und chemische Eigenschaften haben muss. Das Blech für das Schlitzrohr muss eine gute Kaltumformbarkeit bei hoher Festigkeit und Dehngrenze mit guter Schweißbarkeit besitzen, um das Umformen des Bleches und dessen Fügen sicherzustellen.

Als geeignet haben sich vorzugsweise Werkstoffe aus einer nicht aushärtbaren Legierung des Typs AlMg3 erwiesen, die in Masse-% umfasst: 0,40 % Si, 0,40% Fe, 0,10% Cu, 0,50% Mn, 2,6 bis 3,4% Mg, 0,30% Cr, 0,20% Zn, 0,15% Ti, Rest Aluminium, wobei der Anteil von Cr und Mn in der Gesamtsumme 0,10 bis 0,60% nicht übersteigen darf, und eine Zugfestigkeit $R_m$ von 190 bis 240 MPa, vorzugsweise 228 MPa, eine Dehngrenze $R_{0,2}$ von >80 bis 180 MPa, vorzugsweise 108 MPa und eine Härte von 50 bis 91 HBW, vorzugsweise 54 HBW aufweist.

Weitere geeignete Werkstoffe, die diese Randbedingungen erfüllen, sind Werkstoffe folgender Typen:

- AlMg4,5Mn0,7 mit einer Zugfestigkeit von 275 bis 350 MPa, einer Streckgrenze von 125 bis 190 MPa und einer Härte von 75 HBW,
- AlMgSi0,5 mit einer Zugfestigkeit von 215 MPa, einer Streckgrenze von 160 MPa und einer Härte von 65 HBW,
- AlMgSi1 mit einer Zugfestigkeit von 275 bis 300 MPa, einer Streckgrenze von 240 bis 255 MPa und einer Härte von 84 bis 91 HBW,
- AlMg2Mn0,8 mit einer eine Zugfestigkeit von 220 bis 270 MPa, einer Streckgrenze von 130 MPa und einer Härte von 63 HB.

Von besonderem Vorteil ist, dass die minimale Wandstärke der Schlitzrohre auf Grund der durch das Rührreibschweißen erreichten höherfesten Längsnaht gegenüber schmelzgeschweißten Rohren bei gleicher Belastung um etwa 1,0 bis 3 mm geringer ausgelegt werden kann, wodurch die Rohre für GIS- und GIL-Anwendungen mit einer reduzierten Wandstärke eingesetzt werden können, was zu erheblichen Material- und Kosteneinsparungen führt.

In einer weiteren bevorzugten Ausgestaltung der Erfindung weist das Schlitzrohr über die gesamte horizontale Länge auf seiner inneren Mantelfläche eine mit der Längsnaht stoffschlüssig verbundene Verstärkung auf.

Dies wird dadurch erreicht, dass die Verstärkung als ein die Kanten der inneren Mantelfläche überdeckendes Stütz- und Schweißbadsicherungselement ausgebildet ist, das nach dem Rührreibschweißen mit den Kanten die um die Höhe der Verstärkung verstärkte, in das Rohrinnere ohne scharfe Übergänge hineinreichende Längsnaht bildet und die Wandstärke des rührreibgeschweißten Schlitzrohrs gegenüber der Wandstärke eines Rohres ohne Nahtverstärkung zusätzlich um mindestens 1% bei gleicher Belastung minimiert ist.

Von besonderem Vorteil ist weiterhin, dass die Verstärkung die Form einer Teilchenfalle annehmen kann, so dass problemlos Rohre für gasisolierte Schaltanlagen mit reduzierten Wandstärken herstellbar sind und die aufwändige Montage der Teilchenfalle am Montageort eingespart werden kann.

Eine weitere zweckmäßige Ausführungsform der Erfindung sieht vor, dass die Verstärkung bzw. Teilchenfalle eine Größe und Form hat, die an eine im Gegenhalter angeordnete Gesenkaufnahme so angepasst ist, dass die Verstärkung bzw. Teilchenfalle mit ihrem den Kanten zugewandten Wandbereich die durch ein Rührreibschweißwerkzeug aufgebrachten Druckkräfte aufnehmen kann, wobei der Wandbereich der Verstärkung oder Teilchenfalle in ihrer Breite deutlich größer ist als der Außendurchmesser des Rührreibschweißwerkzeugpins.

Dies stellt sicher, dass die Rührreibschweißzone in den Wandbereich der Verstärkung hineinreicht und mit den Kanten zu einer um die Höhe der Teilchenfalle verstärkten Längsnaht stoffschlüssig verbunden werden kann.

Von besonderer Bedeutung für die stoffschlüssige Verbindung zwischen Schlitzrohr und Verstärkung ist, dass der Werkstoff für das Blech und die Verstärkung entsprechend aufeinander abgestimmte mechanisch, physikalische und chemische Eigenschaften haben muss. Der Werkstoff für die Verstärkung muss eine sehr gute elektrische Leitfähigkeit neben einer guten Schweißbarkeit, hohen Festigkeit und Härte aufweisen, damit die Befestigung der Verstärkung in den Fügevorgang integriert werden kann. Als geeignet haben sich vorzugsweise Werkstoffe aus einer nicht aushärtbaren Legierung des Typs AlMg3 erwiesen, die in Masse-% umfasst: 0,40 % Si, 0,40% Fe, 0,10% Cu, 0,50% Mn, 2,6 bis 3,4% Mg, 0,30% Cr, 0,20% Zn, 0,15% Ti, Rest Aluminium, wobei der Anteil von Cr und Mn in der Gesamtsumme 0,10 bis 0,60% nicht übersteigen darf, und dass die Legierung eine Zugfestigkeit von 190 bis 240 Mpa, eine Streckgrenze von >80 Mpa und eine Härte von 50 HBW hat.

Weitere Werkstoffe, die diese Randbedingungen erfüllen, sind im Unteranspruch 14 aufgeführt.

Vorteilhaft ist auch, dass die Werkstoffe für das Schlitzrohr und die Verstärkung untereinander kompatibel austauschbar sind, so dass beispielsweise eine Werkstoffkombination aus AlMg3 für das Blech mit E-Al99,5 für die Verstärkung oder AlMg4,5Mn0,7 für das Blech mit AlMgSi0,5 ohne weiteres möglich ist.

Von besonderem Vorteil ist, dass die Wandstärke des Schlitzrohrs auf Grund der durch die innenwandige Verstärkung der Längsnaht gegenüber einem längsnahtgeschweißten Rohr ohne verstärkter Längsnaht bei gleicher Belastung zusätzlich deutlich reduziert werden kann, was zu einer weiteren Material- und Kosteneinsparung führt.

In einer weiteren bevorzugten Ausgestaltung der Erfindung kann die Verstärkung der Längsnaht durch die Bemessung der Steghöhe der Verstärkung je nach den Erfordernissen des Einsatzfalles des Rohrs variiert werden. Mit anderen Worten die Erfindung ermöglicht es, die Nahtdicke an der Stoßfuge der Kanten entsprechend zu vergrößern oder zu verkleinern, wodurch die minimale Wandstärke des Rohrs gezielt an den Einsatzfall angepasst werden kann.

Die Aufgabe wird weiterhin durch ein Verfahren gelöst, dass die Längsnaht im Vergleich zum Grundwerkstoff durch das Rührreibschweißen auf eine Festigkeit eingestellt wird, die mindestens das 0,85fache bis nahe 1,0 der Festigkeit des Grundwerkstoffes beträgt, und die Wandstärke des rührreibgeschweißten Schlitzrohres durch die eingestellte Festigkeit gegenüber der Wanddicke eines schmelzgeschweißten Rohres um mindestens 12% bei gleicher Belastung minimiert wird.

Nach einer weiteren bevorzugten Ausführungsform des erfindungsgemäßen Verfahrens wird die Längsnaht durch eine in das Innere des Schlitzrohrs ohne scharfe Übergänge hineinreichende Verstärkung mittels Rührreibschweißen gefügt, wobei die Wandstärke des Schlitzrohres gegenüber der Wandstärke eines Rohres ohne Nahtverstärkung zusätzlich um mindestens 1,0% bei gleicher Belastung minimiert werden kann.

In einer weiteren vorteilhaften Ausgestaltung des erfindungsgemäßen Verfahrens kann die Verstärkungsdicke und -breite der Längsnaht durch die gewählte Abmessung der Verstärkung bzw. der Teilchenfalle variiert werden.

Weitere Vorteile und Einzelheiten ergeben sich aus der nachfolgenden Beschreibung unter Bezugnahme auf die beigefügten Zeichnungen.

Ausführungsbeispiel

Die Erfindung soll nachstehend an drei Ausführungsbeispielen näher erläutert werden.

Es zeigen

Fig. 1a und 1b perspektivische Ansichten eines GIS-und GIL-Rohrs nach dem Stand der Technik,

Fig. 2 eine Schnittdarstellung des Rührreibschweißens an den Stoßkanten eines zu einem Schlitzrohr umgeformten Bleches nach dem Stand der Technik gemäß JP 11-226757A,

Fig. 3a und 3b eine perspektivische Ansicht des Schlitzrohrs mit rührreibgeschweißter Längsnaht,

Fig. 4 eine perspektivisches Teilansicht des Schlitzrohrs mit innen verstärkter Längsnaht und

Fig. 5 die perspektivische Teilansicht des Schlitzrohrs mit Teilchenfalle als Stütz- und Schweißbadsicherungselement im Gegenlager.

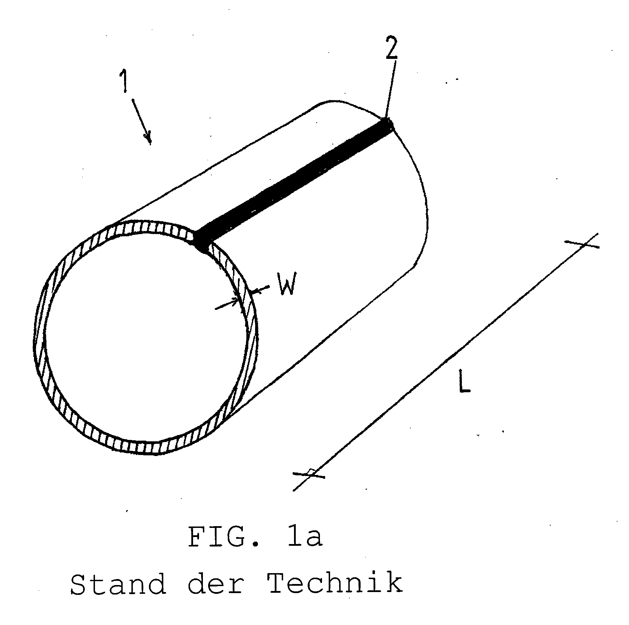

Die Fig. 1a zeigt eine perspektivische Ansicht eines GIS-Rohrs 1 nach dem Stand der Technik, dessen schmelzgeschweißte Längsnaht 2 konventionell durch Schmelzschweißen erzeugt wurde. Das GIS-Rohr 1 hat beispielsweise eine Länge L von 6 m und eine Wandstärke W von bis zu 18 mm. Es besteht aus dem Werkstoff AlMg3 und kommt beispielsweise als gasisolierte Verbindung zu Transformatoren zum Einsatz.

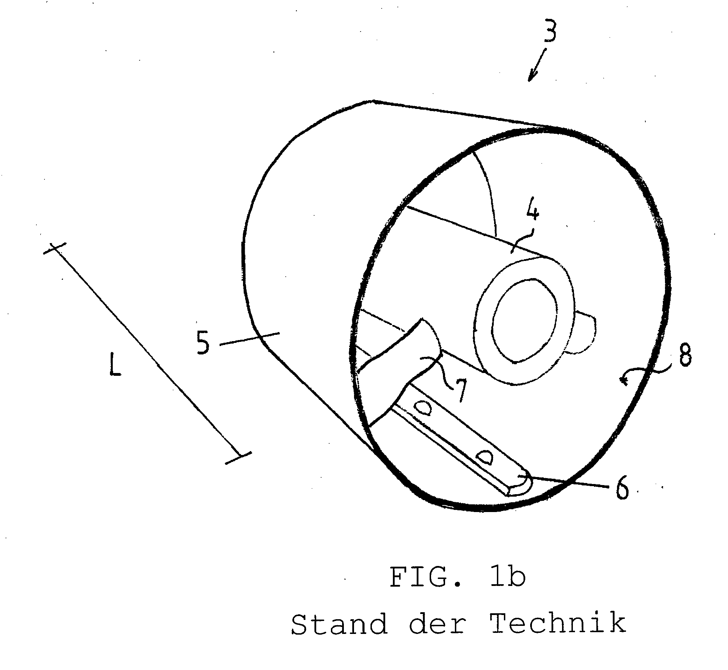

Der in Fig. 1b gezeigte Abschnitt einer GIL-Übertragungsleitung 3 gemäß dem Stand der Technik, wie sie beispielsweise zur unterirdischen Übertragung von Hochspannungen im Bereich von 123 bis 1200 kV eingesetzt wird, setzt sich im Wesentlichen aus einem inneren Aluminiumleiterrohr 4, einem äußeren Rohr 5, einer Teilchenfalle 6 und Isolatoren 7 zusammen. Die Rohrabschnitte haben eine Länge L zwischen 10 und 18 m, einen Außendurchmesser von etwa 375 bis 530 mm und eine Wandstärke von 10 bis 15 mm. Sie sind mit Isoliergas aus einem Stickstoff/$SF_6$-Gemisch gefüllt. Der Innendruck des Isoliergases liegt bei 7 bar, d.h. 0,70 Mpa.

Das Aluminiumrohr 4 besteht aus E-Al99,5, das äußere Rohr 5 aus einer Aluminiumlegierung, vorzugsweise AlMg3, und die Teilchenfalle 6 aus E-Al99,5. Die Teilchenfalle 6 verläuft bodenseitig auf der inneren Mantelfläche 8 in Längsrichtung des Rohrs 5 über die gesamte Länge L und wird durch einen im Rohr verfahrbaren Schweißroboter mittels Punktschweißen mit der Mantelfläche 8 verbunden.

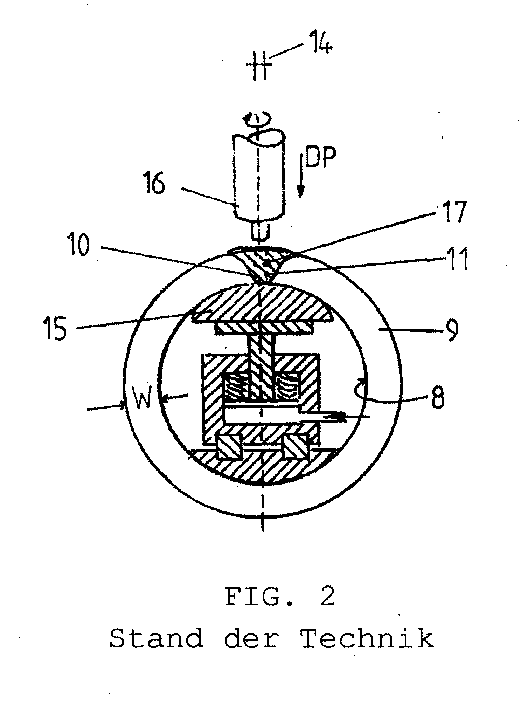

Die Rohre 1 oder 5 werden nach dem Stand der Technik aus einem planen Blech einer Aluminiumlegierung, vorzugsweise AlMg3, auf einer bekannten Walzen-Blech-Maschine zu einem Schlitzrohr 9 umgeformt, dessen Kanten 10 und 11 auf Stoß 12 liegen und über die gesamte Länge L einen Längsspalt 13 mit definiertem Spaltabstand 14 bilden. Die Fig. 2 zeigt das Längsfügen mittels Rührreibschweißen der auf Stoß liegenden Kanten des Schlitzrohres 9 nach dem Stand der Technik. Im Schlitzrohr 9 befindet sich ein hydraulisch angetriebener Gegenhalter 15, der sich über die gesamte Länge L des Schlitzrohrs 9 erstreckt und die Druckkraft DP des Rührreibschweißwerkzeugs 16 an der inneren Mantelfläche 8 des Schlitzrohrs 9 aufnimmt und zugleich als Schweißbadsicherung dient. Die rührreibgeschweißte Längsnaht ist mit 17 und die Wandstärke des rührreibgeschweißten Schlitzrohres 9 mit W1 bezeichnet.

**Beispiel 1**

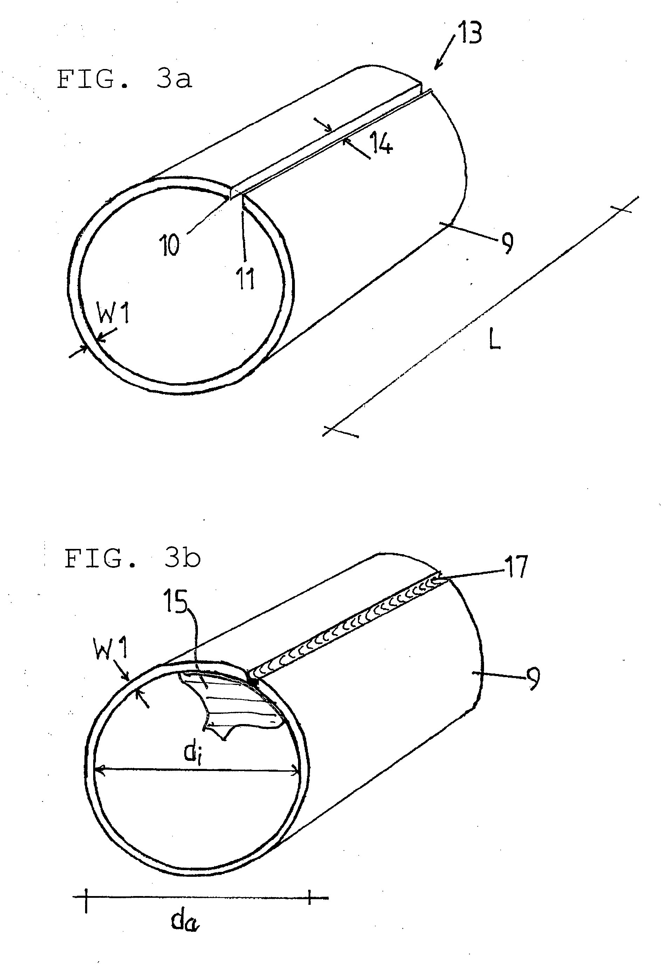

Die Fig. 3a zeigt das aus einem planen Blech einer AlMg3-Legierung umgeformte Schlitzrohr 9 vor dem Längsnahtfügen und die Fig. 3b das gefügte Schlitzrohr 9 mit einer Länge von 6m und einer Wandstärke W1 von 5 mm, dessen auf Stoß liegende Kanten 10 und 11 durch die Längsnaht 17 mittels Rührreibschweißen verbunden werden soll.

Es ist bekannt, dass rührreibgeschweißte Nähte porenfrei sind und eine hohe statische und dynamische Festigkeit gegenüber Schmelzschweißverbindungen aufweisen, sofern lange Bahnen (x/y-Richtung) mit großen Krümmungsradien (Z-Richtung), also große Rohre, gefügt werden.

Nach der Kesselformel beträgt die minimale Wandstärke eines mit Innendruck p beaufschlagten Rohres:

$$s_{min} = \frac{p*d}{4*\sigma_{zulN}} \qquad (1)$$

worin bedeuten:

$S_{min}$     die minimale Wandstärke des Rohres in mm,
p     der Innendruck in Pa,
$\sigma_{zul}$     zulässige Spannung in Pa.

Ist das Rohr durch einen Schweißprozess hergestellt, erhöht sich die minimale Wandstärke $s_{min}$ durch die Schwächung an der Schweißnaht.

Die zulässige Spannung in der Schweißnaht wird durch den Schweißfaktor $v_N$ bestimmt, der sich wie folgt ergibt:

$$\sigma_{zulN} = v_N * \sigma_{zul} \qquad (2)$$

Der Schweißfaktor gibt das Verhältnis der Zugfestigkeit der Schweißnaht zur Zugfestigkeit des Grundwerkstoffs an. Es sind Faktoren zwischen 0,5 bis 1,0 möglich. Ein Schweißfaktor 1,0 bedeutet, dass die zulässige Berechnungsspannung der Schweißnaht gleich der Berechnungsspannung des Grundwerkstoffs ist.

Die minimale Wandstärke eines geschweißten Rohres ergibt sich aus der Kesselformel (1) unter Anwendung von (2) zu

$$S_{min} = \frac{p+d}{4 * v_N * \sigma_{zul}} \qquad (3).$$

Für schmelzgeschweißte Rohre folgt daraus die minimale Wandstärke:

$$S_{min\,Schmelz} = \frac{p*d}{4 * v_{NSchmelz} * \sigma_{zul}} \qquad (4).$$

Ebenso gilt für rührreibgeschweißte Rohre:

$$S_{min\,Rührreib} = \frac{p*d}{4 * v_{NRührreib} * \sigma_{zul}} \qquad (5).$$

Setzt man die beide minimale Wandstärken ins Verhältnis, ergibt sich das Wandstärkenverhältnis:

$$V_W = \frac{S_{min\,Rührreib}}{S_{min\,Schmelz}}$$

Aus den Beziehungen nach (4) und (5) folgt:

$$V_W = \frac{v_{NRührreib}}{v_{NSchmelz}}$$

Das bedeutet, dass das Verhältnis der minimalen Wandstärken Vw von mit unterschiedlichen Methoden geschweißten Rohren, genau dem Verhältnis der Schweißfaktoren dieser Schweißverfahren entspricht.

Durch Versuche konnte für rührreibgeschweißte Längsnähte 17 an einem Schlitzrohr aus der Aluminiumlegierung AlMg3 mit 5 mm Wandstärke ein Schweißnahtfaktor $v_N$ von 0,85 nachgewiesen werden. Dieser Schweißnahtfaktor übersteigt bereits deutlich die durch Schmelzschweißen erreichte Schweißnahtwertigkeit (Schweißfaktor 0,7), wodurch im Vergleich zum Schmelzschweißen die minimale Wandstärke um etwa 20% bei gleicher Belastung minimiert werden kann.

Für ein nach dem erfindungsgemäßen Verfahren hergestelltes rührreibgeschweißtes Schlitzrohr 9 mit einem Außendurchmesser $d_a$ von 385 mm, einer Wandstärke W1 von 5 mm, einem Innendurchmesser $d_i$ von 380 mm, einem Innendruck von 7bar (0,7 MPa) und einem Schweißfaktor $v_N$ von 0,85 ergibt sich unter Zugrundelegung eines Festigkeitskennwertes von 30 MPa (zulässige Mindestdehngrenze $Rp_{1,0}$) nach Roloff/Matek "Maschinenelemente", TB-15, Vieweg-Verlag, 18. Auflage) unter Anwendung der Kesselformel (1) die minimale Wandstärke $S_{min}$ (mit Sicherheitszuschlag) zu 4,025 mm. Somit besteht die Möglichkeit, die Wandstärke W1 des Schlitzrohres 9 bis zu etwa 20% gegenüber der Wandstärke W des schmelzgeschweißten Rohrs 1 in Abhängigkeit des Schweißnahtfaktors zu senken, so dass mit der Erfindung eine erhebliche Materialeinsparung realisiert werden kann.

**Beispiel 2**

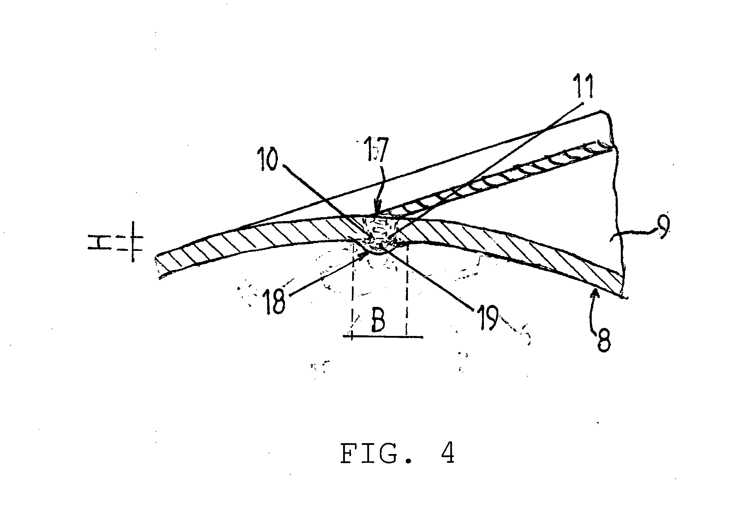

Die Fig. 4 zeigt eine weitere Ausführungsform des Schlitzrohres 9, dessen auf Stoß liegende Kanten 10 und 11 durch Rührreibschweißen verbunden sind.

Unterhalb der Kanten 10 und 11 des Schlitzrohres 9 liegt entlang des Längsspaltes 13 an der inneren Mantelfläche 8 eine Verstärkung 18 in Form eines Profils, dessen dem Längsspalt 13 zugewandter Wandbereich 19 mit den Kanten 10 und 11 stoffschlüssig durch Rührreibschweißen verbunden ist und zugleich die Längsnaht 17 an der Mantelfläche 8 durch einen linsenartig aufgewölbten Bereich ohne scharfe Übergänge innen verstärkt.

Diese durch die Verstärkung 18 innen verstärkte Längsnaht 17 führt unter Beibehaltung der vorgenannten Bedingungen und Berechnungswerte zu einer Reduzierung der minimalen Wandstärke $s_{min}$ um etwa 1,0%.

Die Verstärkung 18 ist als Stütz- und Schweißbadsicherungselement 20 ausgebildet, dessen der inneren Mantelfläche 8 zugewandter Wandbereich 19 eine Breite B besitzt, die den Längsspalt 13 der Kanten auf der Innenseite des Schlitzrohres 9 bis in den Bereich des Außendurchmessers $D_W$ des Rührreibschweißpins 23 überdeckt, so dass der Wandbereich 19 der Verstärkung 18 in der Lage ist, die beim Rührreibschweißen durch das Rührreibschweißwerkzeug 16 aufgebrachten Kräfte Dp in Verbindung mit dem Gegenhalter 15 aufzunehmen (siehe auch Fig. 2)

**Beispiel 3**

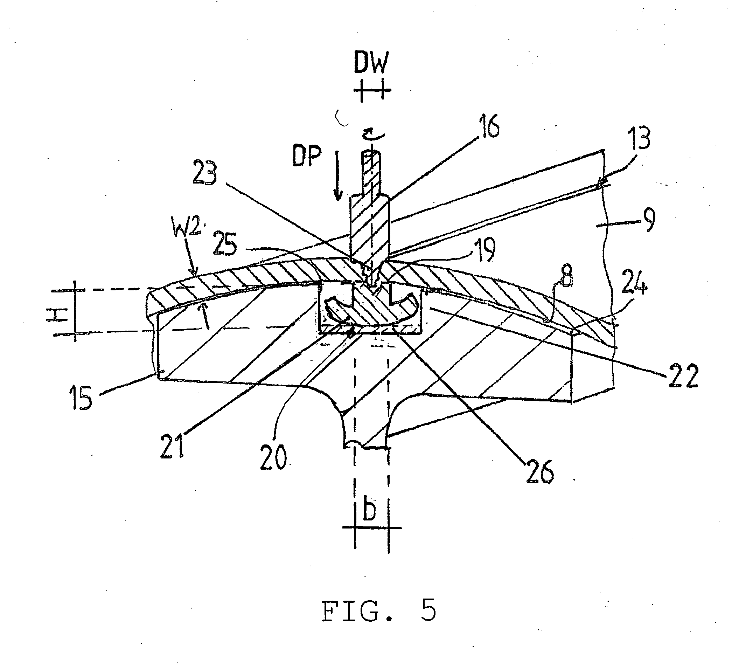

Die Fig. 5 zeigt eine Ausführungsform des Schlitzrohrs 9, bei dem die Verstärkung 18 als Teilchenfalle 6 ausgebildet ist. Die Teilchenfalle 6 ist -wie bereits im Beispiel 2 näher erläutert- ebenso als Stütz- und Schweißbadsicherungselement 20 ausgebildet, das vorzugsweise aus einem pilz- oder T-förmigen Profil 21 gebildet ist, dessen Steg 22 den Wandbereich 19 bildet. Der Steg 22 besitzt die Breite b und überdeckt somit den Längsspalt der Kanten an der Innenseite des Schlitzrohrs 5 bis etwa in den Bereich des Außendurchmessers $D_W$ des Rührreinschweißpins 23.

Die Herstellung des Rohrs 5 nach dem erfindungsgemäßen Verfahren wird aus den Fig. 3 bis 5 deutlich. Der Gegenhalter 15, der in das Schlitzrohr 9 eingefahren ist, nimmt die Funktion eines Stütz- und Schweißbadsicherungselementes wahr und ist mit seiner Arbeitsfläche 24 an die Krümmung der inneren Mantelfläche 8 des Schlitzrohres 9 angepasst, so dass die Kräfte $D_P$ des Rührreibschweißwerkzeuges 16 sicher aufgenommen werden können, ohne dass das Rohr unrund wird.

Für den Fall, dass die Längsnaht 17 innen verstärkt werden soll, besitzt der Gegenhalter 15 eine Gesenkaufnahme 25, welche in Form und Abmessung so ausgebildet ist, dass sie in der Lage ist, die Verstärkung 18 oder die Teilchenfalle 6 als Stütz- und Schweißbadsicherungselement 20 positionsgenau in Bezug zum Längsspalt 13 und zum Rührreibschweißwerkzeug 16 aufzunehmen.

In der Gesenkaufnahme 25 können Zwischenlagen 26 eingelegt werden, welche es erlauben, Verstärkungen 18 bzw. Teilchenfallen 6 als Stütz- und Schweißbadsicherungselemente mit verschiedenen Breiten b oder B und Steghöhen H aufzunehmen, so dass es möglich wird, Längsnähte 17 mit unterschiedlich Verstärkungen zu versehen. Mit anderen Worten, durch die innere Verstärkung der Längsnaht 17 wird die wirksame Wandstärke W1 des Schlitzrohrs 9 im Bereich der stoffschlüssigen Verbindung zwischen den Kanten 10 und 11 und der Verstärkung 18 bzw. der Teilchenfalle 6 um die Steghöhe H vergrößert.

Der Werkstoff für das Schlitzrohr 9, die Verstärkung 18 bzw. die Teilchenfalle 6 ist vorzugsweise eine nicht aushärtbare Legierung des Typs AlMg3, die in Masse-% umfasst: 0,40 % Si, 0,40% Fe, 0,10% Cu, 0,50% Mn, 2,6 bis 3,4% Mg, 0,30% Cr, 0,20% Zn, 0,15% Ti, Rest Aluminium, wobei der Anteil von Cr und Mn in der Gesamtsumme 0,10 bis 0,60% nicht übersteigen darf, und dass die Legierung eine Zugfestigkeit von 190 bis 240 MPa, eine Streckgrenze von >80 MPa und eine Härte von 50 HBW hat.

Vorteilhafterweise sollten die Werkstoffe für das Schlitzrohr 9, die Verstärkung 18 bzw. die Teilchenfalle 6 in ihren mechanischen, physikalischen und chemischen Eigenschaften sorgfältig aufeinander abgestimmt sein.

Als geeignet für das Schlitzrohr und die Verstärkung 18/Teilchenfalle 6 haben sich auch die Aluminiumlegierungen des Typs AlMg4,5Mn0,7 erwiesen, die in Masse-% umfasst: 0,40% Si, 0,40% Fe, 0,10% Cu, 0,40 bis 1,0% Mn 4,0 bis 4,9% Mg, 0,05 bis 0,25% Cr,0,25% Zn, 0,15% Ti, übrige einzelne Elemente 0,05%, Rest Al, und dass die Legierung eine Zugfestigkeit von 275 bis 350 MPa, eine Streckgrenze von 125 bis 190 MPa und eine Härte von 75 HBW hat.

Darüber hinaus sind als Werkstoffe für das Schlitzrohr 9, das Verstärkungsprofil 18 bzw. die Teilchenfalle 6 Aluminiumlegierungen des Typs AlMgSi0,5, AlMgSi1, AlMg2Mn0,8 oder E-All99,5 geeignet. Die Werkstoffe können miteinander kombiniert werden, ohne die Erfindung zu verlassen.

Die Erfindung hat den Vorteil, dass die Wandstärke für GIS-Rohre 1 oder Rohre 5 für GIL Übertragungsleitungen deutlich reduziert und zugleich die Montage der GIL-Rohre erheblich vereinfacht werden können, weil das nachträgliche Einbringen der Teilchenfalle bei der Montage vor Ort entfällt, dadurch durch die Montage beschleunigt und die gesamte Technik zur Befestigen der Teilchenfalle im verlegten Rohr eingespart werden kann.

Bezugszeichenliste

GIS-Rohr 1

Schmelzgeschweißte Längsnaht von 1 2
GIL-Übertragungsleitung 3
Inneres Aluminiumleiterrohr 4
Äußeres Rohr von 3 5
Teilchenfalle 6
Isolatoren 7
Innere Mantelfläche von 1, 5, 9 8
Schlitzrohr 9
Kanten 10, 11
Stoß von 10, 11 12
Längsspalt 13
Spaltabstand 14
Gegenhalter 15
Rührreibschweißwerkzeug 16
Rührreibgeschweißte Längsnaht von 9 17
Verstärkung 18
Wandbereich von 18 19
Stütz- und Schweißbadsicherungselement 20
Pilz- oder T-förmiges Profil 21
Steg von 21 22
Rührreibschweißpin von 16 23
Arbeitsfläche von 15 24
Gesenkaufnahme in 15 25
Zwischenlage 26
Breite von 19 B
Breite von 21 b
Außendurchmesser von 23 $D_W$
Druckkraft von 16 $D_P$
Steghöhe von 18, 21 H
Länge von 1, 5, 9 L
Wandstärke von Rohr mit schmelzgeschweißter Längsnaht W
Wandstärke von Rohr mit rührreibgeschweißter Längsnaht W1
Wandstärke von Rohr mit verstärkter rührreibgeschweißter Längsnaht W2

**Patentansprüche**

1. Innendruckbeaufschlagtes Rohr aus Aluminium oder einer Aluminiumlegierung für gasisolierte Schaltanlagen (GIS) oder Übertragungsleitungen (GIL), das aus einem planen Blech mit definierter Wanddicke durch Rundbiegen oder Formwalzen zu einem Schlitzrohr (9) umgeformt ist, dessen auf Stoß (12) gegenüberliegende Kanten (10,11) gegeneinander gedrückt und mit einem Gegenhalter (15) abgestützt durch Rührreibschweißen miteinander zu einer Längsnaht (17) verbunden sind, **dadurch gekennzeichnet, dass** die Längsnaht (17) im Vergleich zum Grundwerkstoff eine Festigkeit aufweist, die mindestens das 0,85fache bis nahe 1,0 der Festigkeit des Grundwerkstoffes beträgt und die Wandstärke (W1) des Schlitzrohres (9) durch die mit dem Rührreibschweißen eingestellte Festigkeit gegenüber der Wanddicke (W) eines schmelzgeschweißten Rohres um mindestens 12% bei gleicher Belastung minimiert ist.

2. Rohr nach Anspruch 1, **dadurch gekennzeichnet, dass** der Werkstoff für das Schlitzrohr (9) eine nicht aushärtbare Legierung des Typs AlMg3 ist, die in Masse-% umfasst: 0,40 % Si, 0,40% Fe, 0,10% Cu, 0,50% Mn, 2,6 bis 3,4% Mg, 0,30% Cr, 0,20% Zn, 0,15% Ti, Rest Aluminium, wobei der Anteil von Cr und Mn in der Gesamtsumme 0,10 bis 0,60% nicht übersteigen darf, und dass die Längsnaht (10) eine Zugfestigkeit $R_m$ von 190 bis 240 MPa, vorzugsweise 228 MPa, eine Dehngrenze $R_{0,2}$ von >80 bis 180 MPa, vorzugsweise 108 MPa und eine Härte von 50 bis 91 HBW, vorzugsweise 54 HBW aufweist.

3. Rohr nach Anspruch 1, **dadurch gekennzeichnet, dass** der Werkstoff für das Schlitzrohr (9) eine nicht aushärtbare Legierung des Typs AlMg4,5Mn0,7 ist, die in Masse-% umfasst: 0,40% Si, 0,40% Fe, 0,10% Cu, 0,40 bis 1,0% Mn 4,0 bis 4,9% Mg, 0,05 bis 0,25% Cr, 0,25% Zn, 0,15% Ti, übrige einzelne Elemente 0,05%, Rest Al, und dass die Legierung eine Zugfestigkeit von 275 bis 350 MPa, eine Streckgrenze von 125 bis 190 MPa und eine Härte von 75

EP 3 067 149 A1

HBW hat.

4. Rohr nach Anspruch 1, **dadurch gekennzeichnet, dass** der Werkstoff für das Schlitzrohr (9) eine aushärtbare Legierung des Typs ist, die in Masse-% umfasst: 0,30 bis 0,60% Si, 0,10 bis 0,30% Fe, 0,10% Cu, 0,10% Mn, 0,35 bis 0,60% Mg, 0,05% Cr, 0,15% Zn, 0,10% Ti, Rest Al, und dass die Legierung eine Zugfestigkeit von 215 MPa, eine Streckgrenze von 160 MPa und eine Härte von 65 HBW hat.

5. Rohr nach Anspruch 1, **dadurch gekennzeichnet, dass** der Werkstoff für das Schlitzrohr (95) eine aushärtbare Legierung des Typs AlMgSi1 ist, die in Masse-% umfasst: 0,7 bis 1,3% Si, 0,15% Fe, 0,10% Cu, 0,40 bis 1,0% Mn, 0,60 bis 1,2% Mg, 0,25% Cr, 0,20% Zn, 0,10% Ti, 0,15% übrige Elemente, Rest Al, und dass die Legierung eine Zugfestigkeit von 275 bis 300 MPa, eine Streckgrenze von 240 bis 255 MPa und eine Härter von 84 bis 91 HBW hat.

6. Rohr nach Anspruch 1, **dadurch gekennzeichnet, dass** der Werkstoff für das Schlitzrohr (9) eine nicht aushärtbare Legierung des Typs AlMg2Mn0,8 ist, die in Masse-% umfasst: 0,40% Si, 0,50% Fe, 0,19% Cu, 0,50 bis 1,1% Mn, 1,6 bis 2,5% Mg, 0,20% Zn, 0,15% Ti, 0,30% Cr, 0,15% übrige Elemente, Rest Al, und dass die Legierung eine Zugfestigkeit von 220 bis 270 MPa, eine Streckgrenze von 130 MPa und eine Härte von 63 HBW hat.

7. Rohr nach Anspruch 1, **dadurch gekennzeichnet, dass** der Werkstoff für das Schlitzrohr (9) aus E-Al99,9 besteht.

8. Rohr nach Anspruch 1, **dadurch gekennzeichnet, dass** die Wandstärke (W1) des Schlitzrohrs (9) gegenüber einem schmelzgeschweißten Rohr um mindestens 1,0 bis 3 mm reduziert ist.

9. Rohr nach Anspruch 1, **dadurch gekennzeichnet, dass** das Schlitzrohr (9) über die gesamte horizontale Länge (L) auf seiner inneren Mantelfläche (8) eine mit der Längsnaht (17) stoffschlüssig verbundene Verstärkung (18) aufweist.

10. Rohr nach Anspruch 1, **dadurch gekennzeichnet, dass** die Verstärkung (18) die Form einer Teilchenfalle (6) hat.

11. Rohr nach Anspruch 9, **dadurch gekennzeichnet, dass** die Verstärkung (18) als ein die Kanten der inneren Mantelfläche überdeckendes Stütz-und Schweißbadsicherungselement (20) ausgebildet ist, das nach dem Rührreibschweißen mit den Kanten eine um die Höhe der Verstärkung (18) verstärkte, in das Rohrinnere ohne scharfe Übergänge hineinreichende Längsnaht (17) bildet und die Wandstärke (W1) des rührreibgeschweißten Schlitzrohrs (9) gegenüber der Wandstärke eines Rohres ohne Nahtverstärkung zusätzlich um mindestens 1% bei gleicher Belastung minimiert ist.

12. Rohr nach Anspruch 9 oder 10, **dadurch gekennzeichnet, dass** die Verstärkung (18) bzw. Teilchenfalle (6) eine Größe und Form hat, die an eine im Gegenhalter (15) angeordnete Gesenkaufnahme (22) so angepasst ist, dass die Verstärkung (18) bzw. Teilchenfalle (6) mit ihrem den Kanten (10,11) zugewandten Wandbereich (19) die durch ein Rührreibschweißwerkzeug (16) aufgebrachten Druckkräfte aufnimmt, wobei der Wandbereich (19) der Verstärkung (18) oder Teilchenfalle (6) in ihrer Breite (B,b)) deutlich größer ist als der Außendurchmesser (DW) des Rührreibschweißwerkzeugpins (23).

13. Rohr nach Anspruch 12, **dadurch gekennzeichnet, dass** die Verstärkung (18) oder Teilchenfalle (6) aus einer Legierung des Typs AlMg3 oder AlMg4,5Mn0,7 oder AlMgSi0,5 oder AlMgSi1,0 oder AlMg2Mn0,8 bzw. aus E-Al99,5 besteht, wobei die Verstärkung (18) oder Teilchenfalle (6) gegenüber dem Schlitzrohr (9) materialgleich oder materialungleich ist.

14. Verfahren zum Herstellen eines innendruckbeaufschlagtes Rohrs nach Anspruch 1, bei dem aus einem planen Blech mit definierter Wanddicke ein Schlitzrohr (9) durch Rundbiegen oder Formwalzen umgeformt wird, dessen am Schlitz auf Stoß (9) gegenüberliegende Kanten (10,11 gegeneinander gedrückt und an einem Gegenhalter (15) abgestützt durch Rührreibschweißen miteinander zu einer Längsnaht (17) verbunden werden, **dadurch gekennzeichnet, dass** die Längsnaht (17) im Vergleich zum Grundwerkstoff durch das Rührreibschweißen auf eine Festigkeit eingestellt wird, die mindestens das 0,85fache bis nahe 1,0 der Festigkeit des Grundwerkstoffes beträgt, und die Wandstärke (W1) des rührreibgeschweißten Schlitzrohrs (9) in Abhängigkeit des Einsatzfalls durch die eingestellte Längsnaht-Festigkeit gegenüber der Wanddicke (W) eines schmelzgeschweißten Rohres um mindestens 12% bei gleicher Belastung minimiert wird.

15. Verfahren nach Anspruch 15, **dadurch gekennzeichnet, dass** die Längsnaht (17) durch eine in das Innere des Schlitzrohrs (9) ohne scharfe Übergänge hineinreichende Verstärkung (18) mittels Rührreibschweißen gefügt wird.

16. Verfahren nach Anspruch 16, **dadurch gekennzeichnet, dass** die Längsnaht (17) durch die Bemessung der Breite (B,b) und Steghöhe (H) der Verstärkung (18) je nach Einsatzfall variabel verstärkbar ist.

FIG. 1a

Stand der Technik

FIG. 1b
Stand der Technik

FIG. 2
Stand der Technik

FIG. 3a

FIG. 3b

FIG. 4

FIG. 5

**Europäisches Patentamt**
**European Patent Office**
**Office européen des brevets**

## EUROPÄISCHER RECHERCHENBERICHT

**Nummer der Anmeldung**

EP 15 00 0745

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | JP H11 226757 A (HITACHI LTD) 24. August 1999 (1999-08-24) * Zusammenfassung; Abbildungen * ----- | 1-16 | INV. B23K20/12 H02G5/06 B23K20/233 |
| A | US 2004/041005 A1 (TANAKA SUNAO [JP] ET AL) 4. März 2004 (2004-03-04) * Zusammenfassung; Abbildungen * ----- | 1-16 | |

**RECHERCHIERTE SACHGEBIETE (IPC)**

B23K
H02G

Der vorliegende Recherchenbericht wurde für alle Patentansprüche erstellt

| Recherchenort | Abschlußdatum der Recherche | Prüfer |
|---|---|---|
| München | 18. August 2015 | Caubet, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 0745

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2015

| Im Recherchenbericht angeführtes Patentdokument | Datum der Veröffentlichung | Mitglied(er) der Patentfamilie | Datum der Veröffentlichung |
|---|---|---|---|
| JP H11226757 A | 24-08-1999 | KEINE | |
| US 2004041005 A1 | 04-03-2004 | JP 3507050 B2<br>JP 2003094177 A<br>US 2004041005 A1 | 15-03-2004<br>02-04-2003<br>04-03-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005032710 A1
- WO 2007006685 A1
- EP 0519228 B1
- DE 2211987 A1
- DE 813289 C
- DE 1084851 C
- DE 1408769 A1
- DE 2716949 A1
- EP 1362648 B1
- DE 19927106 B4
- DE 60224290 T2
- DE 112012001777 T5
- DE 1964813 A1
- DE 2028560 C3
- DE 3116060 C2
- DE 102009051695 B3
- DE 102012006472 B4
- DE 10148958 A1
- JP 11333572 A
- JP 11226757 A
- JP H11333572 A

**In der Beschreibung aufgeführte Nicht-Patentliteratur**

- **G. WOSSOG.** Handbuch Rohrleitungsbau. Vulkan Verlag GmbH, 2002, vol. II, 127-133